# EUROPEAN PATENT SPECIFICATION

(11) **EP 3 230 355 B1**
(45) Date of publication and mention of the grant of the patent: **11.03.2020**
(21) Application number: 15828555.1
(22) Date of filing: 01.12.2015
(51) Int. Cl.: C08K 3/00, C08K 3/32, C08G 18/44, C08L 75/06

(54) **HALOGEN-FREE FLAME-RETARDANT COMPOSITION**
HALOGENFREIE FLAMMHEMMENDE ZUSAMMENSETZUNG
COMPOSITION IGNIFUGE EXEMPTE D'HALOGÈNES

(30) Priority: 12.12.2014 US 201462091028 P
(43) Date of publication of application: 18.10.2017
(73) Proprietor: Lubrizol Advanced Materials, Inc., Cleveland, OH 44141-3247 (US)
(72) Inventor: MAKADIA, Chetan M., Wickliffe, Ohio 44092-2298 (US)
(74) Representative: Bradley, Josephine Mary
(86) International application number: PCT/US2015/063139
(87) International publication number: WO 2016/094120

(56) References cited:
- WO-A1-2014/124967
- WO-A1-2014/179092
- US-A1- 2014 296 359

## Description

### FIELD OF THE INVENTION

The present invention relates to flame-retardant compositions, and more particularly to flame-retardant compositions comprising a thermoplastic polyurethane resin, a polycarbonate polymer, and a flame-retardant additive, where the flame-retardant additive does not contain halogens. The compositions of this invention are useful for applications where high flame performance, high modulus, high impact strength, as well as high heat deflection temperatures are desirable. The compositions are particularly useful in molding applications where flame-retardant properties are important. This invention also relates to processes to produce the described flame-retardant compositions and processes to produce molded articles with the composition.

### BACKGROUND OF THE INVENTION

Blends of thermoplastic polyurethane resins (TPU) and polycarbonate polymers (PC) are often desirable for the physical properties that the combination is able to provide. Proper blending of the TPU and PC is important because the ultimate properties of the final product are dependent upon the degree of mixing of the components. However, processing mixtures of TPU and PC is often challenging because the higher temperatures required to process PC can cause decomposition of TPU. Often, additional polymers are added to aid in the processing and mixing of TPU and PC, but this adds costs and in some cases, the processing aids create a decline in desirable physical properties of the combination.

In addition, flame specifications for many applications are becoming more stringent. Coupled with the ongoing movement away from halogen-containing additives, there are currently no non-halogenated flame-retardant thermoplastic polyurethane (TPU) and polycarbonate polymer (PC) products on the market that can meet demanding flame test requirements, such as Underwriters Laboratories Vertical Burn Standard UL-94 (also referred to herein as UL-94), while still having desirable physical properties such as high modulus, high heat deflection temperature, and high impact strength. Often, including flame-retardant additives with the TPU and PC mixture causes a decrease in the desired physical properties, such as impact strength, heat deflection temperature, and modulus.

Thus, there is a need for flame-retardant TPU-PC compositions and products with improved high flame-retardant properties that have high modulus, high impact strength, and high heat deflection temperature. There is also a need for a flame-retardant, TPU-PC blend that is halogen free. Further, there is a need for a TPU-PC blend that can be processed at lower temperatures and/or without the inclusion of a processing aid.

The present invention meets these ongoing needs.

WO 2014/179092 A1 discloses a thermoplastic polyurethane composition comprising: (a) a thermoplastic polyurethane resin; (b) an inorganic aluminum phophinate; (c) a melamine derivative; (d) a polyhydric alcohol; and (e) one or more fillers comprising talc; wherein the inorganic aluminum phosphinate makes up less than 18 percent by weight of the flame retardant thermoplastic polyurethane composition; wherein the talc makes up less than 10 percent by weight of the flame retardant thermoplastic polyurethane composition.

WO 2014/124967 A1 describes a plastic material comprising thermoplastic polyurethane, nanoclay, polyol, polycarbonate, polycaprolactone and one or more additives selected from a stabilizer and/or elasticity modulator, whereby the nanoclay is a silicate substance which comprises silicon and/or aluminium.

US 2014/0296359 discloses a method for the isocyanate-free production of a synthetic material product I comprising a) mixing thermoplastic polyurethane (TPU) and a nonclay component comprising i. mixing 70-90 wt % of the TPU with 10-30 wt % of the nonclay component, thereby producing intermediate product la, followed by ii. mixing 90-99 wt % of the TPU with 0.1-1.0 wt% of the intermediate product la, thereby producing intermediate product I, b) mixing 10-90% of the intermediate product I obtained from a) with 8-30 wt% of a polyol component, and optionally additional TPU, thereby producing intermediate product II, c) mixing 50-70 wt% intermediate product II obtained from b) with 20-40 wt% polycarbonate (PC) and/or 16-18 wt% polycaprolacone component (PLC), thereby producing product I, wherein one or more for said mixings in a) to c) occurs in a segmented single, twin, or multiple screw melt extruder at melting temperatures between 80 and 300 degrees C.

### SUMMARY OF THE INVENTION

The present invention provides a flame-retardant thermoplastic polyurethane composition that is defined in the appended claims and comprises: (a) a thermoplastic resin, (b) a polycarbonate polymer, and (c) an inorganic phosphinate flame-retardant additive. In one useful embodiment, the inorganic phosphinate flame-retardant additive is an aluminum phosphinate based flame-retardant additive.

In an embodiment of the invention, in addition to flame-retardant properties, the composition has high impact resistance, high modulus, and high heat deflection temperature. In particular, in one embodiment of the invention, the composition has one or more of the following properties: a V1 or V0 flame rating at a thickness of 125 mil as measured by UL 94 vertical burn testing, average impact strength of at least 5 ft-lb/in as measured by ASTM D256 at room temperature, a flex modulus of greater than 100,000 psi as measured by ASTM D790, and a heat deflection temperature of at least 50°C as measured by ASTM D648 at 264 psi.

In an embodiment of the invention, the TPU component of the invention is made by reacting at least one polyester polyol intermediate, at least one diisocyanate, and at least one chain extender.

The flame-retardant composition of the present invention may include one or more additives, wherein the additives are selected from waxes, antioxidants, hydrolysis stabilizers, UV stabilizers, dyes, pigments, reinforcing fillers, or combinations thereof.

In an embodiment of the invention, a shaped polymeric article is made using the composition comprising a TPU component, a PC component, and an inorganic phosphinate based flame-retardant additive.

The present invention provides a flame-retardant thermoplastic polyurethane composition that is defined in the appended claims and comprises: (a) a TPU resin, (b) a PC polymer, and (c) an inorganic phosphinate based flame-retardant additive wherein the composition and/or each of the components is substantially free or even completely free of halogen atoms, halogen containing salts, and/or other halogen containing compounds.

The present invention also provides a flame-retardant thermoplastic polyurethane composition that is defined in the appended claims and comprises: (a) a TPU resin, (b) a PC polymer, and (c) an inorganic phosphinate based flame-retardant additive wherein the composition is substantially free or even completely free of acrylic polymer processing aids as compatibilizer for blending the TPU and PC.

The invention further provides for any of the compositions described herein where component (c) includes an inorganic aluminum salt of phosphinic acid represented by the formula: [R¹R²P(O)O]⁻₃Al³⁺, an inorganic aluminum salt of diphosphinic acid represented by the formula: [O(O)PR¹-R³-PR²(O)O]²⁻₃Al³⁺₂, a polymer of one or more thereof, or any combination thereof, wherein R¹ and R² are hydrogen and R³ is an alkyl group.

The invention further provides a process of making any of the flame-retardant compositions described herein. The process includes the step of mixing the components of the flame-retardant composition together. In some embodiments, the process includes the step of (1) mixing: (a) a TPU resin, (b) a PC polymer, and (c) an inorganic phosphinate based flame-retardant additive, resulting in a flame-retardant composition.

The invention further provides a method of improving the compounding and processing ability of a TPU-PC blend and/or composition described herein while maintaining the physical properties of the TPU-PC blend composition. The method includes the step of adding to (a) a TPU and (b) a PC an aluminum phosphinate based flame-retardant additive, which acts as a compatibilizer or processing aid for the TPU and PC.

The invention also includes a method of making a flame-retardant composition comprising the steps of mixing (a) a TPU, (b) a PC, and (c) an inorganic phosphinate based flame-retardant additive and extruding the mixture at a temperature of about 171 °C (340°F) to about 216 °C (420°F).

The invention, including the above embodiments, is described in more detail below.

### DETAILED DESCRIPTION OF THE INVENTION

The compositions of the present invention are flame-retardant compositions that include: (a) a TPU resin; (b) a PC polymer, and (c) an inorganic phosphinate. In some embodiments, component (a), the TPU resin, component (b), the PC polymer, and component (c), the inorganic phosphinate, are each essentially halogen-free, or even completely halogen-free.

There is ongoing desire for materials that combine excellent flame-retardant properties with excellent physical properties. Often, one has to choose between one or the other, and deal with less than excellent properties in one of the areas. For example, using additives to improve the flame-retardant properties of certain compositions can provide excellent flame-retardant properties, but, generally at the expense of the excellent physical properties, such as impact strength or heat deflection temperature. Thus, finding a TPU composition that provides excellent flame-retardant properties while maintaining the excellent physical properties is a goal that continues to elude the industry. The present invention provides a new composition with this optimal balance of properties.

### The TPU component

The TPU resin and/or polymer suitable for use in this invention may include any TPU polymer. The TPU polymer component of the present invention may include a polyether TPU, a polyester TPU, a polycarbonate TPU, or any combination thereof. The compositions of this invention may also include one or more other polymeric materials, blended with the TPU.

TPU is generally made by reacting a polyisocyanate with at least one diol chain extender, and optionally one or more hydroxyl terminated intermediates. U.S.

Patent No. 6,777,466 to Eckstein et al. provides detailed disclosure of processes to provide certain TPU polymers that may be utilized in embodiments of the present invention.

Suitable polyisocyanates to make the TPU include aromatic diisocyanates such as 4,4'-methylenebis-(phenyl isocyanate) (MDI), m-xylene diisocyanate (XDI), phenylene-1,4-diisocyanate, naphthalene-1,5-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate (H12MDI).

Mixtures of two or more polyisocyanates may be used. In some embodiments, the polyisocyanate is MDI and/or H12MDI. In some embodiments, the polyisocyanate may include MDI. In some embodiments, the polyisocyanate may include H12MDI.

Suitable chain extenders to make the TPU include relatively small polyhydroxy compounds, for example lower aliphatic or short chain glycols having from 2 up to about 20 or from 2 up to 12, or from 2 up to 10 carbon atoms. Suitable examples include ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2-hydroxyethoxy) phenyl]propane (HEPP) and hydroxyethyl resorcinol (HER), and the like, as well as mixtures thereof. In some embodiments, the chain extenders are 1,4-butanediol and 1,6-hexanediol. Other glycols, such as aromatic glycols could be used, but in some embodiments, the TPUs of the invention are not made using such materials.

In some embodiments, the chain extender used to prepare the TPU includes a cyclic chain extender. Suitable examples include CHDM, HEPP, HER, and combinations thereof. In some embodiments, the chain extender used to prepare the TPU includes an aromatic cyclic chain extender, for example, HEPP, HER, or a combination thereof. In some embodiments, the chain extender used to prepare the TPU includes an aliphatic cyclic chain extender, for example, CHDM. In some embodiments, the chain extender used to prepare the TPU is substantially free of, or even completely free of aromatic chain extenders, for example, aromatic cyclic chain extenders.

Suitable polyols (hydroxyl terminated intermediates), when present, include one or more hydroxyl terminated polyesters, one or more hydroxyl terminated polyethers, one or more hydroxyl terminated polycarbonates or mixtures thereof.

Suitable hydroxyl terminated polyester intermediates that may be used to prepare any of the additional TPU materials of the invention include linear polyesters having a number average molecular weight (Mn) of from about 500 to about 10,000, from about 700 to about 5,000, or from about 700 to about 4,000. The molecular weight is determined by assay of the terminal functional groups and is related to the number average molecular weight. The polyester intermediates may be produced by (1) an esterification reaction of one or more glycols with one or more dicarboxylic acids or anhydrides or (2) by transesterification reaction, i.e., the reaction of one or more glycols with esters of dicarboxylic acids. Mole ratios generally in excess of more than one mole of glycol to acid are preferred so as to obtain linear chains having a preponderance of terminal hydroxyl groups. Suitable polyester intermediates also include various lactones such as polycaprolactone typically made from ε-caprolactone and a bifunctional initiator such as diethylene glycol. The dicarboxylic acids of the desired polyester can be aliphatic, cycloaliphatic, aromatic, or combinations thereof. Suitable dicarboxylic acids which may be used alone or in mixtures generally have a total of from 4 to 15 carbon atoms and include: succinic, glutaric, adipic, pimelic, suberic, azelaic, sebacic, dodecanedioic, isophthalic, terephthalic, cyclohexane dicarboxylic, and the like. Anhydrides of the above dicarboxylic acids such as phthalic anhydride, tetrahydrophthalic anhydride, or the like, can also be used. Adipic acid is a preferred acid. The glycols which are reacted to form a desirable polyester intermediate can be aliphatic, aromatic, or combinations thereof, including any of the glycol described above in the chain extender section, and have a total of from 2 to 20 or from 2 to 12 carbon atoms. Suitable examples include ethylene glycol, 1,2-propanediol, 1,3-propanediol, 1,3 butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and mixtures thereof. For example, a useful polyester polyol for making the TPU utilized in the present invention may be the reaction product of butanediol and adipic acid.

Suitable hydroxyl terminated polycarbonates that may be used to prepare any of the additional TPU materials of the invention include those prepared by reacting a glycol with a carbonate. U.S. Patent No. 4,131,731 discloses hydroxyl terminated polycarbonates and their preparation. Such polycarbonates are linear and have terminal hydroxyl groups with essential exclusion of other terminal groups. The essential reactants are glycols and carbonates. Suitable glycols are selected from cycloaliphatic and aliphatic diols containing 4 to 40, and or even 4 to 12 carbon atoms, and from polyoxyalkylene glycols containing 2 to 20 alkoxy groups per molecular with each alkoxy group containing 2 to 4 carbon atoms. Diols suitable for use in the present invention include aliphatic diols containing 4 to 12 carbon atoms such as butanediol-1,4, pentanediol-1,4, neopentyl glycol, hexanediol-1,6, 2,2,4-trimethylhexanediol-1,6, decanediol-1,10, hydrogenated dilinoleylglycol, hydrogenated dioleylglycol; and cycloaliphatic diols such as cyclohexanediol-1,3, dimethylolcyclohexane-1,4, cyclohexanediol-1,4, dimethylolcyclohexane-1,3, 1,4-endo-methylene-2-hydroxy-5-hydroxymethyl cyclohexane, and polyalkylene glycols. The diols used in the reaction may be a single diol or a mixture of diols depending on the properties desired in the finished product. Polycarbonate intermediates which are hydroxyl terminated are generally those known to the art and in the literature. Suitable carbonates are selected from alkylene carbonates composed of a 5 to 7 member ring. Suitable carbonates for use herein include ethylene carbonate, trimethylene carbonate, tetramethylene carbonate, 1,2-propylene carbonate, 1,2-butylene carbonate, 2,3-butylene carbonate, 1,2-ethylene carbonate, 1,3-pentylene carbonate, 1,4-pentylene carbonate, 2,3-pentylene carbonate, and 2,4-pentylene carbonate. Also, suitable herein are dialkylcarbonates, cycloaliphatic carbonates, and diarylcarbonates. The dialkylcarbonates can contain 2 to 5 carbon atoms in each alkyl group and specific examples thereof are diethylcarbonate and dipropylcarbonate. Cycloaliphatic carbonates, especially dicycloaliphatic carbonates, can contain 4 to 7 carbon atoms in each cyclic structure, and there can be one or two of such structures. When one group is cycloaliphatic, the other can be either alkyl or aryl. On the other hand, if one group is aryl, the other can be alkyl or cycloaliphatic. Examples of suitable diarylcarbonates, which can contain 6 to 20 carbon atoms in each aryl group, are diphenylcarbonate, ditolylcarbonate, and dinaphthylcarbonate.

In some embodiments, one or more of the TPU polymers used in the invention is made by reacting a polyisocyanate with a chain extender, with or without any polyol being present. The reactants may be reacted together in a "one-shot" polymerization process wherein all of the components are added together simultaneously or substantially simultaneously to a heated extruder and reacted to form the TPU polymer. The reaction temperature for processes to make TPU is generally from about 175°C to about 245°C, and in some embodiments from about 180°C to about 220°C. In some embodiments, the equivalent ratio of the diisocyanate to the total equivalents of the hydroxyl terminated intermediate and the diol chain extender is generally from about 0.95 to about 1.05, desirably from about 0.97 to about 1.03, or from about 0.98 to about 1.01.

The ingredients necessary to make the TPU (hydroxyl terminated intermediate, polyisocyanate, and chain extender, can optionally be reacted in the presence of a catalyst. Generally, any conventionally catalyst can be utilized to react the diisocyanate with the hydroxyl terminated intermediate or the chain extender and the same is well known to the art and literature. Examples of suitable catalysts include the various alkyl ethers or alkyl thiol esters of bismuth or tin wherein the alkyl portion has from 1 to about 20 carbon atoms with specific examples including bismuth octoate, bismuth laurate, and the like. Preferred catalysts include the various tin catalysts such as stannous octoate, dibutyltin dioctoate, dibutyltin dilaurate, and the like. The amount of such catalyst may be used in amounts such as from about 20 to about 200 parts per million based upon the total weight of the polyurethane forming monomers. In one embodiment, the TPU used in the present invention may be formed in a reaction that is substantially free of catalyst.

The desired TPU resin used in the TPU compositions of the invention is generally made from the above-noted intermediates with a polyisocyanate, along with an extender glycol. In some embodiments, the reaction is carried out in a so-called "one-shot" process or simultaneous co-reaction of the hydroxyl-terminated intermediate, diisocyanate, and extender glycol to produce a high molecular weight linear TPU polymer. The preparation of the macroglycol is generally well known to the art and to the literature and any suitable method may be used. The weight average molecular weight (Mw) of the TPU polymer may generally be about 80,000 to 800,000, or even from about 90,000 to about 450,000 Daltons. The equivalent weight amount of diisocyanate to the total equivalent weight amount of hydroxyl containing components, that is the hydroxyl terminated intermediate, and chain extender glycol, may be from about 0.95 to about 1.10, or from about 0.96 to about 1.02, or from about 0.97 to about 1.005. In one embodiment, the TPU is substantially free of crosslinking and may even be completely free of any measurable crosslinking.

In one embodiment, the one-shot polymerization process generally occurs in situ, wherein a simultaneous reaction occurs between the components, that is, the one or more intermediates, the one or more polyisocyanates, and the one or more chain extenders. The reaction is generally initiated at temperatures of from about 100°C to about 120°C. Inasmuch as the reaction is exothermic, the reaction temperature generally increases to about 220°C-250°C. In one exemplary embodiment, the TPU polymer may be pelletized following the reaction.

In some embodiments, the TPU component of the invention includes a polyether TPU, a polyester TPU, a polycarbonate TPU, or any combination thereof. In some embodiments, the TPU component of the invention includes a polyester TPU and may further or alternatively include a polycarbonate TPU, or any combination thereof. In still other embodiments, the TPU component of the invention includes a polyester TPU and is essentially free of or even completely free of any polyether TPU.

In any of the embodiments described above, the TPU material present in the composition can have a number average molecular weight ranging from about 50,000 to about 300,000, or even from about 100,000 to about 200,000. The molecular weight of the TPU may be measured by GPC (Gel Permeation Chromatography). These molecular weight ranges may apply independently to any single TPU material present in the composition, but may in other embodiments apply to the overall TPU material present in the composition.

In an embodiment of the invention, a useful TPU has less than 66% hard segment. Hard segment is defined as the segments of the TPU made by the combination of the isocyanate and chain extender components. In another embodiment, a useful TPU has about 40% to about 50% hard segment.

In one embodiment, the TPU useful in the composition of the invention has a Shore A hardness of 95A or less, for example, from 70A to 92A, and further for example 87A to 92A. In another embodiment, the TPU useful in the composition of the invention has a Shore D hardness of less than 60D.

### The Polycarbonate Polymer Component

The polycarbonate polymer (PC) component of the invention may be an aromatic polycarbonate polymer. The aromatic polycarbonate polymer is not overly limited.

Polycarbonates are generally a reaction product of a diol, and in some embodiments a dihydric or polyhydric phenol such as bisphenol A, and carbonic acid, phosgene, and the like. Polycarbonates generally have a repeating carbonate group, i.e., -O-C(O)-O- and generally have an -Ar- radical attached to the carbonate group, where Ar is an aromatic ring, which may contain hydrocarbyl substituent groups. U.S. Pat. No. 3,070,563 is cited as an example of polycarbonate. Polycarbonates are well known and described in many patents and other technical references. In some embodiments, the polycarbonate, or at least the repeating unit of the polycarbonate, can be characterized by the formula: 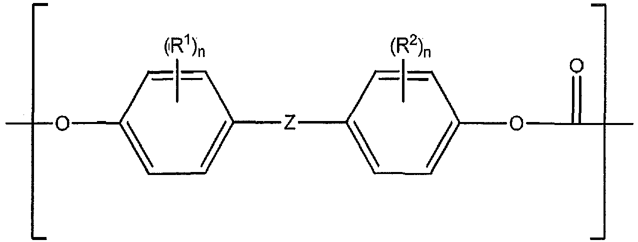 wherein Z is a single bond, an alkylene or alkylidene radical with 1 to 7 carbon atoms, a cycloalkylene or cycloalkylidene radical with 5 to 12 carbon atoms, -O-, -CO-, -SO- or SO₂-; in some embodiments Z is methylene or isopropylidene; R¹ and R² are independently hydrogen, halogen or an alkyl radical having 1 to 7 carbon atoms and in some embodiments R¹ and R² are identical; and n equals 0 to 4. In some embodiments, the polycarbonate of the invention is derived from bisphenol A, for example the reaction product of bisphenol A and phosgene.

The aromatic polycarbonates useful in the invention have a melt flow rate range of greater than 30 to 60 gms/10 min. at 300°C, as measured by ASTM D-1238. A commercially available polycarbonate from many sources is bis(4-hydroxyphenyl)-2,2-propane, known as bisphenol-A polycarbonate. Examples of suitable polycarbonates are set forth in the Encyclopedia of Polymer Science and Engineering, Vol. 11, John Wiley & Sons, Inc., New York, N.Y., 1985, pages 648-718. In some embodiments, the polycarbonate used in the invention is Lexan® available from Sabic, or Panlite® available from Teijin, or Makrolon® available from Bayer.

In some embodiments, the aromatic polycarbonate polymer comprises a polycarbonate homopolymer, a polycarbonate copolymer, or a polycarbonate blend, or combinations thereof. Polycarbonate homopolymers are derived from a single polycarbonate monomer, meaning that the repeating units of the polycarbonate are identical. Polycarbonate copolymers are derived from two or more polycarbonate monomers and so contain two or more different repeating units. These repeating units may be arranged as a random copolymer, a block copolymer, or even a random block copolymer.

The PC polymer used in the flame-retardant composition has a melt flow rate of greater than 30 g/10 minutes.

For example, the melt flow rate of the PC polymer may be more than 30 g/10 minutes up to 60 g/10 minutes. The melt flow rate of the PC polymer may even be less than 60 g/10 minutes.

### The Inorganic Phosphinate Based Flame-Retardant Component

The compositions of the invention include an inorganic phosphinate. Examples of such materials include salts of phosphinic acids and/or diphosphinic acids or polymeric derivatives thereof. These compounds are referred to herein as inorganic phosphinates and/or metal phosphinates.

In some embodiments, the inorganic phosphinate component of the invention includes an inorganic metal salt of phosphinic acid represented by the formula: [R¹R²P(O)O]⁻ₘM^{m+}, a an inorganic metal salt of diphosphinic acid represented by the formula: [O(O)PR¹-R³-PR²(O)O]²⁻ₙMₓ^{m+}, a polymer of one or more thereof, or any combination thereof, wherein: R¹ and R² are hydrogen; R³ is an alkyl group (containing 1 to 4 or even 1 carbon atoms); M is a metal chosen from the group consisting of Mg, Ca, Al, Sb, Sn, Ge, Ti, Zn, Fe, Zr, Ce, Bi, Sr, Mn, Li, Na, and K; and m, n and x are each independently equal or different integers in the range of 1-4.

In some embodiments, the inorganic phosphinate component is inorganic aluminum phosphinate. In some embodiments, the inorganic phosphinate component includes a combination of inorganic aluminum phosphinate along with one or more other metal phosphinates as listed above.

Suitable inorganic phosphinates that can be used in the present invention are also described in DE-A 2 252 258, DE-A 2 447 727, PCT/W-097/39053 and EP-0932643-B1. Various inorganic phosphinate based flame-retardants are commercially available including, but not limited to DP-111, an aluminum phosphinate based flame-retardantfrom JJI Technologies, Phoslite B85AX aluminum phosphinate based flame-retardant, Phoslite® B65AM aluminum phosphinate based flame-retardant and Phoslite B85CX calcium phosphinate based flame-retardant all from Italmatch.

### Additional Components

The TPU compositions of the invention may also include one or more additional components.

In some embodiments, the additional component is an additional flame-retardant. This additional flame-retardant may include a boron phosphate flame-retardant, a dipentaerythritol, a phosphate salt flame-retardant, a phosphate ester flame-retardant, an aromatic phosphate flame-retardant, or any combination thereof. In some embodiments, this additional flame-retardant may include a boron phosphate flame-retardant, a dipentaerythritol, or any combination thereof. A suitable example of a boron phosphate flame-retardant is BUDIT 326, commercially available from Budenheim USA, Inc. In some embodiments, this additional flame-retardant may include a phosphate ester flame-retardant.

When present, the additional flame-retardant component may be present in an amount from 0 to 10 weight percent of the overall TPU composition, in other embodiments from 0.5 to 10, or from 1 to 10, or from 0.5 or 1 to 5, or from 0.5 to 3, or even from 1 to 3 weight percent of the overall TPU composition.

Suitable aromatic phosphate flame-retardants include monophosphates with aromatic groups, diphosphates with aromatic groups, triphosphates with aromatic groups, or any combination thereof. In some embodiments, the aromatic phosphate flame-retardant includes one or more diphosphates with aromatic groups. Examples of such materials include bisphenol A diphosphate.

Suitable examples of compounds that may be used as, or used in combination with, the aromatic phosphate flame-retardant of the invention include triaryl phosphate, polyaryl phosphate esters, such as triphenyl phosphate, tricresyl phosphate, trixylyl phosphate, cresyl diphenyl phosphate, diphenyl xylyl phosphate, 2-biphenylydiphenyl phosphate, alkylated polyaryl phosphate esters such as butylated triphenyl phosphate, t-butylphenyl diphenyl phosphate, bis(t-butyl)phenyl phosphate, tris(t-butylphenyl) phosphate, tris(2,4-di-t-butylphenyl)phosphate, isopropylated triphenyl phosphates, isopropylated t-butylated triphenyl phosphates, t-butylated triphenyl phosphates, isopropylphenyl diphenyl phosphate, bis(isopropylphenyl) phenyl phosphate (3,4-diisopropylphenyl) diphenyl phosphate, tris(isopropylphenyl) phosphate, (1-methyl-1-phenylethyl)phenyl diphenyl phosphate, nonylphenyl diphenyl phosphate, 4-[4-hydroxyphenyl(propane-2,2-diyl)]phenyl diphenyl phosphate, 4-hydroxyphenyl diphenyl phosphate, resorcinol bis(diphenyl phosphate), bisphenol A bis(diphenyl phosphate), bis(ditolyl)isopropylidenedi-p-phenylene bis(phosphate), O,O,O',O'-tetrakis(2,6-dimethylphenyl)-O,O'-m-phenylene bisphosphate, alkylaryl phosphate esters such as 2-ethylhexyl diphenyl phosphate, isodecyl diphenyl phosphate, diethyl phenethylamidophosphate, diisodecyl phenyl phosphate, dibutyl phenyl phosphate, methyl diphenyl phosphate, butyl diphenyl phosphate, diphenyl octyl phosphate, isoctyl diphenyl phosphate, isopropyl diphenyl phosphate, diphenyl lauryl phosphate, tetradecyl diphenyl phosphate, cetyl diphenyl phosphate, tar acids cresylic diphenyl phosphates, trialkyl phosphate esters, such as triethyl phosphate, tributyl phosphate, tri(butoxyethyl)phosphate, 3-(dimethylphosphono)propionic acid methylamide, pentaerythritol cyclic phosphate, and combinations thereof.

Suitable phosphate salt flame-retardants, which are different than those described above, include metal salts of phosphoric acid, phosphorous acid, hypophosphorous acid, amine phosphate, or a combination thereof. The phosphate compound in the mixture may include piperazine pyrophosphate, piperazine polyphosphate, or any combinations thereof. In some embodiments, the phosphate salt flame-retardant further comprises a zinc oxide component. The zinc oxide is not believed to react with the other components of the phosphate salt flame-retardant however, in some embodiments, it is contemplated that the zinc oxide, when present, does not react appreciably with the other components in the phosphate salt flame-retardant.

The compositions of the invention may also include additional additives, which may be referred to as a stabilizer. The stabilizers may include antioxidants such as phenolics, phosphites, thioesters, and amines, light stabilizers such as hindered amine light stabilizers and benzothiazole UV absorbers, and other process stabilizers and combinations thereof. In one embodiment, the stabilizer is Irganox® 1010 from BASF and Naugard® 445 from Chemtura. The stabilizer may be used in the amount from about 0.1 weight percent to about 5 weight percent, in another embodiment from about 0.1 weight percent to about 3 weight percent, and in another embodiment from about 0.5 weight percent to about 1.5 weight percent of the TPU composition. In some embodiments, the compositions of the invention may include one or more sterically hindered phenolic antioxidants (for example, Irganox® 245, commercially available from BASF), one or more sterically hindered phenolic or aromatic amine antioxidants (for example, Argerite® Stalite® S, commercially available from R.T. Vanderbilt), or a combination thereof.

In addition, various conventional inorganic flame-retardant and/or filler components may also be employed in the flame-retardant composition. Suitable examples include any of those known to one skilled in the art, such as metal oxides, metal oxide hydrates, metal carbonates, ammonium phosphate, ammonium polyphosphate, calcium carbonate, antimony oxide, clay, mineral clays including talc, kaolin, wollastonite, nanoclay, montmorillonite clay which is often referred to as nanoclay, and mixture thereof.

For some applications, optional additives, which are not flame-retardants, may be used in the compositions of the invention. The additives include colorants, for example, pigments and dyes; stabilizers such as antioxidants (including phenolics, phosphites, thioesters, and/or amines), hydrolysis stabilizers, heat stabilizers, light stabilizers, hindered amine light stabilizers, stabilizers to prevent discoloration; antiozonates; inert fillers; lubricants; inhibitors; benzotriazole UV absorber; inorganic and organic fillers; reinforcing agents; such as reinforcing fillers; including but not limited to reinforcing fibers, including but not limited glass fibers and carbon fibers; and combinations thereof. The additives are used in an effective amount customary for these substances. The non-flame-retardants additives may be used in amounts of from about 0 to about 30 weight percent, in one embodiment from about 0.1 to about 25 weight percent, and in another embodiment about 0.1 to about 20 weight percent of the total weight of the TPU composition. For this purpose, the aromatic phosphate flame-retardant and the phosphate salt flame-retardant, as well as the optional flame-retardant additives and/or optional additives, can be incorporated into the components of, or into the reaction mixture for, the preparation of the TPU resin, or after making the TPU resin before compounding with the PC polymer. In another process, all the materials can be mixed with the TPU resin and PC polymer and then melted or they can be incorporated directly into the melt of the TPU resin and PC polymer.

In some embodiments, one or more of the components and/or additional additives described above may be commercially available in a package and/or as a single additive or mixture of additives that can then be added to the compositions of the invention and a pre-blended component. For example, inorganic aluminum phosphinates are commercially available as individual additives, and also pre-mixed with other additives including melamine derivatives such as melamine cyanurate and/or phosphate esters. The compositions of the invention, as well as the processes, methods, and uses described herein may be utilized with the individual components or may incorporate pre-blended components. In some embodiments, the compositions of the invention use individual (non-pre-blended) inorganic aluminum phosphinates. In some embodiments, the compositions of the invention use inorganic aluminum phosphinates pre-blended with other components.

### The Flame-Retardant Composition

In one embodiment, the flame-retardant composition comprises a TPU component, a PC component, and an aluminum phosphinate flame-retardant additive. In another embodiment, the flame-retardant composition comprises a TPU component, a PC component, an aluminum phosphinate flame-retardant additive, and optionally one or more additives selected from waxes, antioxidants, hydrolysis stabilizers, UV stabilizers, dyes, reinforcing fillers, pigments, or combinations thereof. In an embodiment of the invention, the flame-retardant composition comprises about 5% to about 95%, or even about 30% to about 70%, or even about 40% to about 46%, or even about 41% to about 45%, by weight of the TPU component, about 5% to about 95%, or even about 30% to about 70%, or even about 40% to about 46%, or even about 41% to about 45% by weight of the PC component, and about 1% to about 20%, or even about 9% to about 12% by weight inorganic phosphinate, such as aluminum phosphinate, flame retardant additive. In an embodiment, each of the TPU and PC components comprises 50% by weight of the combined total weight of the TPU and PC. The composition may also optionally comprise one or more other additives as described above in combined amounts of up to about 0.5% to about 5% by weight of the total composition. It should be understood that the flame-retardant composition of the present invention can be tailored to achieve desired physical properties for the intended application.

In another embodiment, the flame-retardant composition consists essentially of a TPU component, a PC component, and an aluminum phosphinate flame-retardant additive. In still another embodiment, the flame-retardant composition consists essentially of a TPU component, a PC component, an aluminum phosphinate flame-retardant additive, and optionally one or more additives selected from waxes, antioxidants, hydrolysis stabilizers, UV stabilizers, dyes, reinforcing fillers, pigments, or combinations thereof. In an embodiment of the invention, the flame-retardant composition consists essentially of about 40% to about 46% by weight of the TPU component, about 40% to about 46% by weight of the PC component, and about 9% to about 20%, or even about 9% to about 12%, by weight alumimum phosphinate flame retardant additive. In another embodiment, the composition consists essentially of about 40% to about 46% by weight TPU component, about 40% to about 46% by weight PC component, about 9% to about 12% by weight aluminum phosphinate flame retardant additive, and about 0.5% to about 5%% by weight of one or more additives selected from waxes, antioxidants, hydrolysis stabilizers, UV stabilizers, dyes, reinforcing fillers, pigments, or combinations thereof.

Flame retardant compositions in accordance with the present invention preferably have, in addition to flame-retardant properties, high modulus, high impact resistance, and high heat deflection temperature. For flame-retardant properties, it is desired that an embodiment of the invention have at least a V1 flame rating, or even a V0 flame rating with non-dripping properties as measured by UL 94 vertical burn testing. As used herein, high modulus means a flex modulus of greater than 689,476 kPa (100,000 psi) as measured by ASTM D790. As used herein, high impact resistance means an average notched izod impact strength of at least 267 J/m (5 ft-lb/in) as measured by ASTM D256 at room temperature. As used herein, high heat deflection temperature means a heat deflection temperature of at least 50°C as measured by ASTM D648 at 1820 kPa (264 psi). In one useful embodiment, the flame-retardant composition of the present invention has a V0 flame rating at a thickness of 3 mm (125 mil) as measured by UL 94 vertical burn testing, a flex modulus of 689,476 kPa (100,000 psi) to 2,757,903 kPa (400,000 psi), or even 689,476 kPa (100,000 psi) to 1,034,214 kPa (150,000 psi), as measured by ASTM D790, an average impact strength of at least 267 J/m (5 ft-lb/in), or even at least 320 J/m (6 ft-lb/in), at least 374 J/m (7 ft-lb/in), at least 427 J/m (8 ft-lb/in), at least 480 J/m (9 ft-lb/in), at least 534 J/m (10 ft-lb/in), at least 587 J/m (11 ft-lb/in), at least 641 J/m (12 ft-lb/in), at least 694 J/m (13 ft-lb/in), at least 747 J/m (14 ft-lb/in), or at least 801 J/m (15 ft-lb/in), or even 267 J/m (5 ft-lb/in) to 854 J/m (16 ft-lb/in), as measured by ASTM D256 at room temperature, and a heat deflection temperature of at least 50°C, or at least 55°C, or even 60°C measured by ASTM D648 at 1820 kPa (264 psi).

Flame-retardant compositions of the present invention are prepared by methods generally known to those of ordinary skill in the art. However, certain unexpected processing advantages are included in this invention. First, in an embodiment of the invention, the TPU and PC are compounded without a processing aid (also referred to as a compatibilizer). The melt-blending process is typically done with the aid of a processing aid as described in U.S. Pat. No. 4,179,479. Such processing aids usually consist of acrylic polymers having a number average molecular weight of from about 500,000 to about 1,500,000. The acrylic polymer is usually selected from the group consisting of homopolymers of methyl methacrylate, copolymers of methyl methacrylate with n-butyl-methacrylate or ethyl acrylate, or terpolymers of methyl methacrylate, n-butyl acrylate and styrene. The flame retardant composition of the invention is substantially free of acrylic polymers selected from the group consisting of homopolymers of methyl acrylate, copolymers of methyl methacrylate with n-butyl-methacrylate or ethyl acrylate or terpolymers of methyl methacrylate, n-butyl acrylate and styrene. In one embodiment, the flame retardant composition is totally free of these acrylic polymer processing aids.

However, one embodiment of the invention includes the use of an aluminum phosphinate based flame-retardant additive as a compatibilizer for a composition comprising a TPU and a PC.

The TPU resin, PC polymer, and inorganic phosphinate, along with any optional components that may be present, may be compounded together by any means known to those skilled in the art. If a pelletized TPU resin is used, the polymer may be melted at a temperature of about 150°C to 230°C, preferably from about 160-190°C, and more preferably from about 170-180°C. The particular temperature used will depend on the particular TPU resin used, as is well understood by those skilled in the art. The TPU resin, polycarbonate polymer, and inorganic phosphinate, as well as any optional additives that may be present, may be blended to form an intimate physical mixture. Blending can occur in any commonly used mixing device able to provide shear mixing, but a twin screw extruder having multiple heat zones with multiple feeding ports is preferably used for the blending and melting process.

The TPU resin, polycarbonate polymer, and inorganic phosphinate, along with any optional components that may be present, may be pre-blended before adding to the compounding extruder or they may be added or metered into the compounding extruder in different streams and in different zones of the extruder.

In another embodiment, the TPU resin is not pelletized prior to the addition of the PC polymer and inorganic phosphinate. Rather, the process for forming the TPU composition of the invention is a continuous in situ process. The ingredients to form the TPU resin are added to a reaction vessel, such as a twin screw extruder as set forth above. After formation of the TPU resin, the PC polymer and the inorganic phosphinate, and any optional components that may be desired, may be added or metered into the extruder in different streams and/or in different zones of the extruder in order to form the flame-retardant composition of the invention.

The resultant composition may exit the extruder die in a molten state and be pelletized and stored for further use in making finished articles. The finished articles may comprise molded parts. Other finished articles may comprise extruded profiles.

In one embodiment, the TPU resin and PC polymer may be compounded and extruded at lower temperatures than other prior art compounds. In an embodiment, the TPU resin, PC polymer, and inorganic aluminum phosphinate are mixed and extruded at about 171°C (340°F) to about 216°C (420°F).

In one embodiment, the flame-retardant additive used in the present invention is substantially free of halogen atoms, halogen containing salts, and/or other halogen containing compounds. In another embodiment, the flame-retardant additive used in the present invention is totally free of halogen atoms, halogen containing salts, and/or other halogen containing compounds. In still another embodiment, the composition of the present invention is substantially free or totally free of halogen atoms, halogen containing salts, and/or other halogen containing compounds.

### Industrial Application

The compositions of the invention are useful in various applications but are of particular use in applications that can benefit from the combination of properties of PC and TPU, while having one or more of the following properties: good flame resistance, high modulus, high impact strength, and high heat deflection temperature. The compositions of the present invention are useful in any molding applications where the end product has these desired properties.

The invention also includes a shaped polymeric article which may be made from any of the compositions described herein. The compositions can be used with various melt processing techniques including injection molding, compression molding, slush molding, extrusion, thermoforming cast, rotational molding, sintering, and vacuum molding. Articles of this invention may also be made from resins produced by the suspension, mass, emulsion or solution processes. In some embodiments, the article is prepared by extrusion. In other embodiments, the article is prepared by injection molding. Where the article is prepared by injection molding, the article may be packaging materials for electronic components or parts, construction components of clean rooms, parts or tools used in clean rooms, wire coating, cable jacketing, electrical switches or housing, aircraft components, or any combination thereof. In some embodiments the compositions and articles of the extruded sheets, that is sheets made of the described composition formed by extrusion.

It is known that some of the materials described above may interact in the final formulation, so that the components of the final formulation may be different from those that are initially added. The products formed thereby, including the products formed upon employing the composition of the invention in its intended use, may not be susceptible of easy description. Nevertheless, all such modifications and reaction products are included within the scope of the invention; the invention encompasses the composition prepared by admixing the components described above.

The invention will be better understood by reference to the following examples.

### EXAMPLES

The invention will be further illustrated by the following examples, which sets forth particularly advantageous embodiments. While the examples are provided to illustrate the invention, they are not intended to limit it.

A set of compositions is prepared to demonstrate the benefits of the invention. The formulation of each of the compositions is summarized in the tables below (amounts listed are amounts by weight):

### Examples

**Table 1 - Comparative Examples**

| | **A** | **B** | **C** | **D** | **E** | **F** | **G** | **H** | **I** |
|---|---|---|---|---|---|---|---|---|---|
| **TPU 1¹** | **43.35** | **43.35** | **39.35** | **43.35** | **45.89** | **44.85** | **40** | **40** | **41.5** |
| **TPU 2²** | | | **39.35** | | | | | | |
| **PC 1³** | | | | **43.35** | **43.81** | **44.85** | **58.6** | **58** | |
| **PC 2⁴** | **44.35** | **44.35** | | | | | | | **41.5** |
| **Compat.⁵** | | | | | | | | | **7** |
| **F.R. 1⁶** | | | **20** | | | **12** | | | **9** |
| **F.R. 2⁷** | | | | | | | | | |
| **F.R. 3⁸** | | | | **12** | **9** | | | | |
| **F.R. 4⁹** | **11** | | | | | | | | |
| **F.R. 5¹⁰** | | **11** | | | | | | | |
| **F.R. 6¹¹** | | | | | | | **0.1** | | |
| **F.R. 7¹²** | | | | | | | | **0.7** | |
| **Add. 1¹³** | **0.5** | **0.5** | **0.5** | **0.5** | **0.5** | **0.5** | **0.5** | **0.5** | **0.5** |
| **Add. 2¹⁴** | **0.25** | **0.25** | **0.25** | **0.25** | **0.25** | **0.25** | **0.25** | **0.25** | **0.25** |
| **Add. 3¹⁵** | **0.25** | **0.25** | **0.25** | **0.25** | **0.25** | **0.25** | **0.25** | **0.25** | **0.25** |
| **Add. 4¹⁶** | **0.3** | **0.3** | **0.3** | **0.3** | **0.3** | | **0.3** | **0.3** | |

| | | | | | | | | | |
|---|---|---|---|---|---|---|---|---|---|
| ¹ TPU 1 is a polyester based aromatic TPU with a Shore A hardness of 92A. ² TPU 2 is a polyester based aromatic TPU with a Shore D hardness of 75D. ³ PC 1 is a polycarbonate polymer having a melt flow rate of 18 g/10min (measured at 300 °C/1200g). ⁴ PC 2 is a polycarbonate polymer having a melt flow rate of 60 g/10 minutes (measured at 300 °C/1200g). ⁵ Paraloid™-3330 acrylic butyl acrylate compatibilizer from Dow Chemical Company. ⁶ DP-111 aluminum phosphinate based flame-retardant from JJI Technologies. ⁷ Phoslite™ B85AX aluminum phosphinate based flame-retardant from Italmatch. ⁸ Nofia™ HM-1100 polyphosphonate polymer flame-retardant from FRX Polymers. ⁹ Fyroflex™ Sol-DP aryl phosphate flame-retardant from ICL Industrial. ¹⁰ Fyroflex™ RDP resorcinol bis(diphenyl phosphate) flame-retardant from ICL Industrial. ¹¹ HES-FR™ mixed salt of aromatic sulfonates flame-retardant composition from Arichem. ¹² KSS-FR™ potassium diphenylsulfonesulfonate flame-retardant from Arichem. ¹³ Irganox™ 1010 antioxidant additive from BASF. ¹⁴ Tinuvin™ 234 UVA absorber from BASF. ¹⁵ Tinuvin™ 770 hindered amine light stabilizer from BASF. ¹⁶ Calcium stearate lubricant processing aid. | | | | | | | | | |

**Table 2 - Inventive Examples**

| | **J** | **K** | **L** | **M** | **N** |
|---|---|---|---|---|---|
| **TPU 1** | **39.35** | **43.35** | **44.85** | **45.65** | **43.5** |
| **PC 2** | **39.35** | **43.35** | **44.85** | **44.35** | **43.5** |
| **F.R. 1** | **20** | **12** | **9** | **9** | **12** |
| **Add. 1** | **0.5** | **0.5** | **0.5** | **0.5** | **0.5** |
| **Add. 2** | **0.25** | **0.25** | **0.25** | **0.25** | **0.25** |
| **Add. 3** | **0.25** | **0.25** | **0.25** | **0.25** | **0.25** |
| **Add. 4** | **0.3** | **0.3** | **0.3** | | |

Each of the TPU/PC compositions was then tested for (i) Notched Izod Impact Strength measured according to ASTMD256 (unnealed), (ii) flex modulus measured according to ASTM D790, (iii) heat deflection temperature measured according to ASTM D648 at 1820 kPa (264 psi), and (iv) UL94 Vertical Burn test rating at 3 mm (125 mil). The results are summarized in the table below.

**Table 2**

| | **Impact Strength (J/m (ft-lb/in))** | **Flex Modulus (MPa (psi))** | **Heat Deflection Temperature (°C)** | **UL 94** |
|---|---|---|---|---|
| **C** | **72.60 (1.36)** | **2651.80 (384,610)** | **41** | **V0** |
| **D** | **847.14 (15.87)** | **448.80 (65,093)** | **26.5** | **V2** |
| **E** | **1036.64 (19.42)** | **414.47 (60,114)** | **32** | **V2** |
| **F** | **779.35 (14.6)** | **681.32 (98,817)** | **54.5** | **V0** |
| **G** | **121.17 (2.27)** | **2408.00 (349,250)** | **55** | **V2** |
| **H** | **95.55 (1.79)** | **2452.19 (355,660)** | **55.5** | **V2** |
| **I** | **700.35 (13.12)** | **685.13 (99,369)** | **56.6** | **V0** |
| **J** | **162.28 (3.04)** | **880.87 (127,759)** | **53.5** | **V0** |
| **K** | **361.38 (6.77)** | **809.20 (117,364)** | **59** | **V0** |
| **L** | **644.30 (12.07)** | **843.26 (122,305)** | **63.5** | **V1** |
| **M** | **839.67 (15.73)** | **894.24 (129,699)** | **65** | **V0** |
| **N** | **820.45 (15.37)** | **907.29(131,591)** | **69** | **V0** |

Comparative Examples A and B would not compound and no measurements could be made.

The results show the compositions of the present invention provide an excellent balance of flame-retardant properties while still maintaining good physical properties.

Except in the Examples, or where otherwise explicitly indicated, all numerical quantities in this description specifying amounts of materials, reaction conditions, molecular weights, number of carbon atoms, and the like, are to be understood as modified by the word "about". Except where otherwise indicated, all numerical quantities in the description specifying amounts or ratios of materials are on a weight basis. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of' permits the inclusion of substances that do not materially affect the basic and novel characteristics of the composition under consideration. In addition, as used herein, the expression "substantially free of' means an amount that does not materially affect the basic and novel characteristics of the composition under consideration, for example, in some embodiments it may mean no more than 5%, 4%, 3%, 2%, 1%, 0.5%, or even 0.1% by weight of the composition in question, in still other embodiments, it may mean that less than 1,000 ppm, 500 ppm, or even 100 ppm of the material in question is present.

## Claims

1. A flame-retardant composition comprising:
(i) a thermoplastic polyurethane component;
(ii) a polycarbonate polymer component, wherein the polycarbonate polymer component has a melt-flow rate greater than 30 g/10 minutes; and
(iii) an inorganic phosphinate based flame retardant additive;
wherein the composition is substantially free of acrylic polymers selected from the group consisting of homopolymers of methyl acrylate, copolymers of methyl methacrylate with n-butyl-methacraylate or ethyl acrylate or terpolymers of methyl methacrylate, n-butyl acrylate and styrene.

2. The flame-retardant composition of claim 1 wherein (iii) the inorganic phosphinate based flame-retardant additive comprises an aluminum phosphinate based flame-retardant additive.

3. The flame-retardant composition of claims 1 or 2 wherein the thermoplastic polyurethane component is made by reacting (a) at least one polyester polyol intermediate with (b) at least one diisocyanate and (c) at least one chain extender.

4. The flame-retardant composition of any of claims 1 to 3 wherein the thermoplastic polyurethane component has a hardness of less than 60 Shore D.

5. The flame-retardant composition of any of claims 1 to 3, wherein the thermoplastic polyurethane component has a Shore A Hardness of 70A to 95A.

6. The flame-retardant composition of any of claims 1 to 5 wherein the thermoplastic polyurethane component has a molecular weight of 50,000 to 300,000.

7. The flame-retardant composition of any of claims 1 to 6 wherein the polycarbonate component has a melt-flow rate up to 60 g/10 minutes.

8. The flame-retardant composition of any of claims 1 to 7 further comprising one or more additives wherein said one or more additives comprise a wax, an antioxidant, a stabilizer, a colorant, a reinforcing filler, or a combination thereof.

9. The flame-retardant composition of any of claims 1 to 8 wherein the flame-retardant composition has: an average impact strength of at least 267 J/m (5 ft-lb/in) as measured by ASTM D256 at room temperature: a V0 flame rating at a thickness of 3 mm (125 mil) as measured by UL 94 burn testing; a flex modulus of greater than 689,476 kPa (100,000 psi) as measured by ASTM D790; and/or a heat deflection temperature of at least 50°C as measured by ASTM D648 at 1820 kPa (264 psi).

10. The flame-retardant composition of any of claims 1 to 3 wherein the composition is substantially free of halogen atoms, halogen containing salts, and/or other halogen containing compounds.

11. A shaped polymeric article comprising the flame-retardant composition of any of claims 1 to 10.

12. A flame retardant composition consisting essentially of:
(i) a thermoplastic polyurethane component;
(ii) a polycarbonate polymer component, wherein the polycarbonate polymer component has a melt-flow rate greater than 30 g/10 minutes;
(iii) an aluminum phosphinate based flame-retardant additive; and
(iv) optionally, one or more additives selected from a wax, an antioxidant, a hydrolysis stabilizer, a UV stabilizer, a dye, a reinforcing filler, a pigment, or a combination thereof;
wherein the composition is substantially free of acrylic polymers selected from the group consisting of homopolymers of methyl acrylate, copolymers of methyl methacrylate with n-butyl-methacraylate or ethyl acrylate or terpolymers of methyl methacrylate, n-butyl acrylate and styrene.

13. A shaped polymeric article comprising:
(i) a thermoplastic polyurethane component;
(ii) a polycarbonate polymer component, wherein the polycarbonate polymer component has a melt-flow rate greater than 30 g/10 minutes; and
(iii) an aluminum phosphinate based flame retardant additive,
wherein the composition is substantially free of acrylic polymer processing aids for blending the thermoplastic polyurethane component and the polycarbonate polymer component, wherein the composition has average impact strength of at least 267 J/m (5 ft-lb/in) as measured by ASTM D256 at room temperature, a V0 flame rating at a thickness of 3 mm (125 mil) as measured by UL 94 burn testing, a flex modulus of greater than 689,476 kPa (100,000 psi) as measured by ASTM D790, and a heat deflection temperature of at least 50°C as measured by ASTM D648 at 1820 kPa (264 psi).

14. The shaped polymeric article of claim 12, wherein the composition comprises:
(a) 40% to 46% by weight thermoplastic polyurethane component;
(b) 40% to 46% by weight polycarbonate component; and
(c) 9% to 20% by weight aluminum phosphinate based flame-retardant additive.

15. A method of making a shaped flame retardant composition comprising:
(a) mixing:
(i) a thermoplastic polyurethane resin;
(ii) a polycarbonate polymer component, wherein the polycarbonate polymer component has a melt-flow rate greater than 30 g/10 minutes; and
(iii) an aluminum phosphinate based flame retardant additive to form a base mixture;
wherein the composition is substantially free of acrylic polymers selected from the group consisting of homopolymers of methyl acrylate, copolymers of methyl methacrylate with n-butyl-methacraylate or ethyl acrylate or terpolymers of methyl methacrylate, n-butyl acrylate and styrene; and
(b) extruding the mixture at a temperature of 171°C (340°F) to 216°C (420°F).

## Patentansprüche

1. Flammhemmende Zusammensetzung umfassend:
(i) eine thermoplastische Polyurethankomponente;
(ii) eine Polycarbonatpolymerkomponente, wobei die Polycarbonatpolymerkomponente eine Schmelzfließrate von mehr als 30 g/10 Minuten aufweist; und
(iii) ein anorganisches flammhemmendes Zusatzmittel auf Phosphinatbasis;
wobei die Zusammensetzung im Wesentlichen frei von Acrylpolymeren ist ausgewählt aus der Gruppe bestehend aus Homopolymeren von Methylacrylat, Copolymeren von Methylmethacrylat mit n-Butylmethacrylat oder Ethylacrylat oder Terpolymeren von Methylmethacrylat, n-Butylacrylat und Styrol.

2. Flammhemmende Zusammensetzung nach Anspruch 1, wobei (iii) das anorganische flammhemmende Zusatzmittel auf Phosphinatbasis ein flammhemmendes Zusatzmittel auf Aluminiumphosphinatbasis umfasst.

3. Flammhemmende Zusammensetzung nach Anspruch 1 oder 2, wobei die thermoplastische Polyurethankomponente durch Reagieren (a) mindestens eines Polyesterpolyol-Zwischenprodukts mit (b) mindestens einem Diisocyanat und (c) mindestens einem Kettenverlängerungsmittel hergestellt wird.

4. Flammhemmende Zusammensetzung nach einem der Ansprüche 1 bis 3, wobei die thermoplastische Polyurethankomponente eine Härte von weniger als 60 Shore D aufweist.

5. Flammhemmende Zusammensetzung nach einem der Ansprüche 1 bis 3, wobei die thermoplastische Polyurethankomponente eine Shore A-Härte von 70A bis 95A aufweist.

6. Flammhemmende Zusammensetzung nach einem der Ansprüche 1 bis 5, wobei die thermoplastische Polyurethankomponente ein Molekulargewicht von 50.000 bis 300.000 aufweist.

7. Flammhemmende Zusammensetzung nach einem der Ansprüche 1 bis 6, wobei die Polycarbonatkomponente eine Schmelzfließrate von bis zu 60 g/10 Minuten aufweist.

8. Flammhemmende Zusammensetzung nach einem der Ansprüche 1 bis 7, ferner ein oder mehrere Zusatzmittel umfassend, wobei das eine oder die mehreren Zusatzmittel ein Wachs, ein Antioxidationsmittel, einen Stabilisator, ein Farbmittel, einen verstärkenden Füllstoff oder eine Kombination davon umfasst.

9. Flammhemmende Zusammensetzung nach einem der Ansprüche 1 bis 8, wobei die flammhemmende Zusammensetzung Folgendes aufweist: eine durchschnittliche Schlagfestigkeit von mindestens 267 J/m (5 Fuß-Pfund/Zoll), wie durch ASTM D256 bei Raumtemperatur gemessen; eine V0-Flammenbewertung bei einer Dicke von 3 mm (125 mil), wie durch UL 94-Brenntesten gemessen; einen Biegemodul von mehr als 689.476 kPa (100.000 psi), wie durch ASTM D 790 gemessen; und/oder eine Wärmeablenkungstemperatur von mindestens 50°C, wie durch ASTM D648 bei 1820 kPa (264 psi) gemessen.

10. Flammhemmende Zusammensetzung nacheinem der Ansprüche 1 oder 3, wobei die Zusammensetzung im Wesentlichen frei von Halogenatomen, halogenhaltigen Salzen und/oder anderen halogenhaltigen Verbindungen ist.

11. Gestalteter polymerer Artikel umfassend die flammhemmende Zusammensetzung nach einem der Ansprüche 1 bis 10.

12. Flammhemmende Zusammensetzung bestehend im Wesentlichen aus:
(i) einer thermoplastische Polyurethankomponente;
(ii) einer Polycarbonatpolymerkomponente, wobei die Polycarbonatpolymerkomponente eine Schmelzfließrate von mehr als 30 g/10 Minuten aufweist; und
(iii) einem flammhemmenden Zusatzmittel auf Aluminiumphosphinatbasis;
(iv) wahlweise einem oder mehreren Zusatzmitteln ausgewählt unter einem Wachs, einem Antioxidationsmittel, einem Hydrolysestabilisator, einem UV-Stabilisator, einem Farbstoff, einem verstärkenden Füllstoff, einem Pigment oder einer Kombination davon;
wobei die Zusammensetzung im Wesentlichen frei von Acrylpolymeren ist ausgewählt aus der Gruppe bestehend aus Homopolymeren von Methylacrylat, Copolymeren von Methylmethacrylat mit n-Butylmethacrylat oder Ethylacrylat oder Terpolymeren von Methylmethacrylat, n-Butylacrylat und Styrol.

13. Gestalteter polymerer Artikel umfassend:
(i) eine thermoplastische Polyurethankomponente;
(ii) eine Polycarbonatpolymerkomponente, wobei die Polycarbonatpolymerkomponente eine Schmelzfließrate von mehr als 30 g/10 Minuten aufweist; und
(iii) ein flammhemmendes Zusatzmittel auf Aluminiumphosphinatbasis,
wobei die Zusammensetzung im Wesentlichen frei von Acrylpolymer-Verarbeitungshilfsmittels zum Mischen der thermoplastischen Polyurethankomponente und der Polycarbonatpolymerkomponente ist, wobei die Zusammensetzung eine durchschnittliche Schlagfestigkeit von mindestens 267 J/m (5 Fuß-Pfund/Zoll), wie durch ASTM D256 bei Raumtemperatur gemessen, eine V0-Flammenbewertung bei einer Dicke von 3 mm (125 mil), wie durch UL 94-Brenntesten gemessen, einen Biegemodul von mehr als 689 476 kPa (100.000 psi), wie durch ASTM D790 gemessen, und eine Wärmeablenkungstemperatur von mindestens 50°C, wie durch ASTM D648 bei 1820 kPa (264 psi) gemessen, aufweist.

14. Gestalteter polymerer Artikel nach Anspruch 12, wobei die Zusammensetzung Folgendes umfasst:
(a) 40 bis 46 Gew.-% thermoplastische Polyurethankomponente;
(b) 40 bis 46 Gew.-% Polycarbonatkomponente; und
(c) 9 bis 20 Gew.-% flammhemmendes Zusatzmittel auf Aluminiumphosphinatbasis.

15. Verfahren zum Herstellen einer gestalteten flammhemmenden Zusammensetzung umfassend:
(a) Mischen:
(i) eines thermoplastische Polyurethanharzes;
(ii) einer Polycarbonatpolymerkomponente, wobei die Polycarbonatpolymerkomponente eine Schmelzfließrate von mehr als 30 g/10 Minuten aufweist; und
(iii) eines flammhemmenden Zusatzmittels auf Aluminiumphosphinatbasis, um eine Basenmischung zu bilden;
wobei die Zusammensetzung im Wesentlichen frei von Acrylpolymeren ist ausgewählt aus der Gruppe bestehend aus Homopolymeren von Methylacrylat, Copolymeren von Methylmethacrylat mit n-Butylmethacrylat oder Ethylacrylat oder Terpolymeren von Methylmethacrylat, n-Butylacrylat und Styrol; und
(b) Extrudieren der Mischung bei einer Temperatur von 171°C (340°F) bis 216°C (420°F).

## Revendications

1. Composition ignifuge comprenant:
(i) un composant polyuréthane thermoplastique;
(ii) un composant polymère de polycarbonate, le composant polymère de polycarbonate présentant un débit d'écoulement à l'état fondu supérieur à 30 g/10 minutes; et
(iii) un additif ignifuge à base de phosphinate inorganique;
la composition étant sensiblement exempte de polymères acryliques sélectionnés dans le groupe constitué des homopolymères d'acrylate de méthyle, des copolymères de méthacrylate de méthyle avec du méthacrylate de *n*-butyle ou de l'acrylate d'éthyle ou des terpolymères de méthacrylate de méthyle, d'acrylate de *n*-butyle et de styrène.

2. Composition ignifuge selon la revendication 1 dans laquelle (iii) l'additif ignifuge à base de phosphinate inorganique comprend un additif ignifuge à base de phosphinate d'aluminium.

3. Composition ignifuge selon les revendications 1 ou 2 dans laquelle le composant polyuréthane thermoplastique est fabriqué par la réaction (a) d'au moins un intermédiaire polyester polyol avec (b) au moins un diisocyanate et (c) au moins un extenseur de chaîne.

4. Composition ignifuge selon l'une quelconque des revendications 1 à 3 dans laquelle le composant polyuréthane thermoplastique présente une dureté inférieure à 60 Shore D.

5. Composition ignifuge selon l'une quelconque des revendications 1 à 3, dans laquelle le composant polyuréthane thermoplastique présente une dureté Shore A de 70A à 95A.

6. Composition ignifuge selon l'une quelconque des revendications 1 à 5 dans laquelle le composant polyuréthane thermoplastique présente un poids moléculaire de 50 000 à 300 000.

7. Composition ignifuge selon l'une quelconque des revendications 1 à 6 dans laquelle le composant polycarbonate présente un débit d'écoulement à l'état fondu allant jusqu'à 60 g/10 minutes.

8. Composition ignifuge selon l'une quelconque des revendications 1 à 7 comprenant en outre un ou plusieurs additifs où lesdits un ou plusieurs additifs comprennent une cire, un agent antioxydant, un agent stabilisant, un colorant, une charge de renfort, ou une combinaison de ceux-ci.

9. Composition ignifuge selon l'une quelconque des revendications 1 à 8 dans laquelle la composition ignifuge présente: une résistance aux chocs moyenne d'au moins 267 J/m (5 pi-lb/po), telle que mesurée selon la norme ASTM D256 à la température ambiante ; une note d'inflammabilité V0 à une épaisseur de 3 mm (125 mils), telle que mesurée par test de combustion UL 94; un module de flexion supérieur à 689 476 kPa (100 000 lb/po²), tel que mesuré selon la norme ASTM D790; et/ou une température de déflexion de la chaleur d'au moins 50°C, telle que mesurée selon la norme ASTM D648 à 1 820 kPa (264 lb/po²).

10. Composition ignifuge selon l'une quelconque des revendications 1 à 3, la composition étant sensiblement exempte d'atomes d'halogène, de sels contenant de l'halogène, et/ou d'autres composés contenant un halogène.

11. Article polymère mis en forme comprenant la composition ignifuge selon l'une quelconque des revendications 1 à 10.

12. Composition ignifuge constituée essentiellement:
(i) d'un composant polyuréthane thermoplastique;
(ii) d'un composant polymère de polycarbonate, le composant polymère de polycarbonate présentant un débit d'écoulement à l'état fondu supérieur à 30 g/10 minutes;
(iii) un additif ignifuge à base de phosphinate d'aluminium; et
(iv) optionnellement, un ou plusieurs additifs sélectionnés parmi une cire, un agent antioxydant, un stabilisant d'hydrolyse, un stabilisant du rayonnement UV, un colorant, une charge de renfort, un pigment, ou une combinaison de ceux-ci;
la composition étant sensiblement exempte de polymères acryliques sélectionnés dans le groupe constitué des homopolymères d'acrylate de méthyle, des copolymères de méthacrylate de méthyle avec du méthacrylate de *n*-butyle ou de l'acrylate d'éthyle ou des terpolymères de méthacrylate de méthyle, d'acrylate de *n*-butyle et de styrène.

13. Article polymère mis en forme comprenant:
(i) un composant polyuréthane thermoplastique;
(ii) un composant polymère de polycarbonate, le composant polymère de polycarbonate présentant un débit d'écoulement à l'état fondu supérieur à 30 g/10 minutes; et
(iii) un additif ignifuge à base de phosphinate d'aluminium, où la composition est sensiblement exempte d'auxiliaires de transformation polymères acryliques pour mélanger le composant polyuréthane thermoplastique et le composant polymère de polycarbonate, la composition présentant une résistance aux chocs moyenne d'au moins 267 J/m (5 pi-lb/po), telle que mesurée selon la norme ASTM D256 à la température ambiante, une note d'inflammabilité V0 à une épaisseur de 3 mm (125 mils), telle que mesurée par test de combustion UL 94, un module de flexion supérieur à 689 476 kPa (100 000 lb/po²), tel que mesuré selon la norme ASTM D790, et une température de déflexion de la chaleur d'au moins 50°C, telle que mesurée selon la norme ASTM D648 à 1820 kPa (264 lb/po²).

14. Article polymère mis en forme selon la revendication 12, dans lequel la composition comprend:
(a) de 40 % à 46 % en poids de composant polyuréthane thermoplastique;
(b) de 40 % à 46 % en poids de composant polycarbonate; et
(c) de 9 % à 20 % en poids d'additif ignifuge à base de phosphinate d'aluminium.

15. Procédé de fabrication d'une composition ignifuge mise en forme comprenant:
(a) le mélange:
(i) d'une résine de polyuréthane thermoplastique;
(ii) d'un composant polymère de polycarbonate, le composant polymère de polycarbonate présentant un débit d'écoulement à l'état fondu supérieur à 30 g/10 minutes; et
(iii) d'un additif ignifuge à base de phosphinate d'aluminium pour former un mélange de base;
la composition étant sensiblement exempte de polymères acryliques sélectionnés dans le groupe constitué des homopolymères d'acrylate de méthyle, des copolymères de méthacrylate de méthyle avec du méthacrylate de *n*-butyle ou de l'acrylate d'éthyle ou des terpolymères de méthacrylate de méthyle, d'acrylate de *n*-butyle et de styrène; et
(b) l'extrusion du mélange à une température de 171°C (340°F) à 216°C (420°F).
